# EUROPÄISCHE PATENTSCHRIFT

(11) **EP 4 675 800 B1**
(45) Veröffentlichungstag und Bekanntmachung des Hinweises auf die Patenterteilung: **21.10.2026**
(21) Anmeldenummer: 25186807.1
(22) Anmeldetag: 01.07.2025
(51) Int. Cl.: H01M 50/26, H01M 50/507, H01M 50/509, H01M 50/516, H01M 50/522, H01M 50/103, H01M 50/547, H01M 50/502, H01M 50/548, H01M 50/55

(54) **BATTERIEMODUL, BATTERIE UND FAHRZEUG**
BATTERY MODULE, BATTERY, AND VEHICLE
MODULE DE BATTERIE, BATTERIE ET VÉHICULE

(30) Priorität: 03.07.2024 DE 102024002164
(43) Veröffentlichungstag der Anmeldung: 07.01.2026
(73) Patentinhaber: Mercedes-Benz Group AG, 70372 Stuttgart (DE)
(72) Erfinder: STEFFENS, Dirk, 71384 Weinstadt (DE); ELSNER, Christian, 70734 Fellbach (DE)
(74) Vertreter: Novagraaf Group

(56) Entgegenhaltungen:
- EP-A1- 3 958 346
- DE-A1- 102015 210 035
- US-A1- 2005 260 491
- US-A1- 2016 322 673

## Beschreibung

Die Erfindung betrifft ein Batteriemodul nach der im Oberbegriff von Anspruch 1 näher definierten Art. Außerdem betrifft die Erfindung eine Batterie mit wenigstens einem solchen Batteriemodul sowie ein Fahrzeug mit wenigstens einer solchen Batterie.

Batteriemodule, welche aus einem Stapel von prismatischen Batterieeinzelzellen bestehen, sind prinzipiell aus dem Stand der Technik bekannt. Die JP 2007-323952 A beschreibt beispielsweise ein solches Batteriemodul, bei welchem die elektrische Kontaktierung des Batteriemoduls durch metallische Kontaktelemente erfolgt, welche mit den metallischen Polen der Batterieeinzelzellen in dem Stapel verbunden werden. Diese einzelnen Zellverbinder sind dann mit metallischen Kontaktplatten verbunden, und zwar durch Ultraschallschweißen, um so auch verschiedene Materialien untereinander verschweißen zu können.

Aus der US 2016 / 322 673 A1 ist ein im Wesentlichen gattungsgemäßes Batteriemodul bekannt. Die Zellen sind dabei in Rahmen gehalten. Diese sind unteruntereinander verschweißt, um die Batteriepole der Zellen zu kontaktieren.

Ferner kann auf die DE 10 2010 012 930 A1 verwiesen werden, welche eine Batterie mit einem Stapel von Batterieeinzelzellen zeigt. Dabei ist ausführlich beschrieben, wie eine Batterie aufgebaut wird, nämlich indem die Batterieeinzelzellen vergleichsweise aufwändig mit Spannelementen zwischen Endplatten verspannt werden. Dieser mechanische Aufbau zum Verspannen der Batterieeinzelzellen ist entsprechend aufwändig und teuer, er macht den Aufbau kompliziert und schwer.

Alternativ dazu ist es aus der DE 10 2015 210 035 A1 bekannt Zellverbinder in Kombination mit einem Träger zu nutzen, um die Batterieeinzelzellen elektrisch und auch mechanisch zu verbinden. Auch dieser Aufbau ist immer noch vergleichsweise aufwändig und schwer.

Zum weiteren Stand der Technik kann auf die WO 2015 / 102 708 A2 verwiesen werden, welche eine Batterieeinzelzelle mit mehren Polen je Polarität zeigt. Zum weiteren allgemeinen Stand der Technik kann ferner auf die DE 10 2021 119 695 A1 verwiesen werden.

Zum weiteren allgemeinen Stand der Technik kann ferner auf die EP 3 958 346 A1, die US 2005 / 260 491 A1 sowie die DE 10 2015 210 035 A1 verwiesen werden.

Die Aufgabe der hier vorliegenden Erfindung besteht nun darin ein verbessertes Batteriemodul anzugeben, welches die Nachteile aus dem Stand der Technik vermeidet.

Erfindungsgemäß wird diese Aufgabe durch ein Batteriemodul mit den Merkmalen im Anspruch 1 gelöst. Vorteilhafte Ausgestaltungen und Weiterbildungen ergeben sich aus den hiervon abhängigen Unteransprüchen. Außerdem löst eine Batterie die Aufgabe. Diese Batterie lässt sich vorzugsweise in einem Fahrzeug einsetzen.

Bei dem erfindungsgemäßen Batteriemodul werden ähnlich wie im eingangs genannten Stand der Technik Zellverbinder eingesetzt, um die Batterieeinzelzellen bzw. ihre jeweiligen Batteriepole in der gewünschten Art und Weise, also beispielsweise als Parallelschaltung oder als Reihenschaltung, elektrisch zu verbinden. Dabei ist es nun vorgesehen, dass diese Zellverbinder zusätzlich die Funktionalität übernehmen, die Batterieeinzelzellen auch mechanisch zu verbinden, sodass aus den Batterieeinzelzellen und den auf die entsprechenden Batteriepole der benachbarten Batterieeinzelzellen aufgeschweißten Zellverbinder ein selbsttragender Aufbau entsteht.

Jede der Batterieeinzelzellen weist zwei Batteriepole jeder Polarität auf, wobei die Batteriepole derselben Polarität an gegenüberliegenden Seiten der Batterieeinzelzellen ausgebildet sind, wobei bei im Inneren des Zellstapels liegenden Batterieeinzelzellen beide Batteriepole der jeweiligen Polarität mittels Zellverbindern mit den entsprechenden Batteriepolen der benachbarten Batterieeinzelzelle verbunden sind. Dieser Aufbau ermöglicht es auf gegenüberliegenden Seiten des Zellstapels dieselbe Verbindung aufzubauen, um so mechanisch eine sehr gute Verbindung der einzelnen Batterieeinzelzellen über die Zellverbinder zu realisieren.

Hierdurch kann auf aufwändige zusätzliche Bauelemente wie Endplatten, Spannanker, Spannbänder oder dergleichen gänzlich verzichtet werden. Der Aufbau wird dadurch außerordentlich einfach, effizient und leicht. Außerdem ist er einfach in der Montage, da die Zellverbinder zur elektrischen Kontaktierung der Batterieeinzelzellen ohnehin mit den Batteriepolen verbunden werden müssen, sodass der selbstragende Aufbau des Stapels der Batterieeinzelzellen ohne zusätzlichen Montageaufwand erfolgen kann.

Gleichzeitig entstehen Redundanzen bei der elektrischen Verschaltung, da jeweils zwei Batteriepole in derselben Art und Weise verschaltet sind, sodass neben einem mechanisch stabilen Aufbau auch ein elektrisch sehr zuverlässig verschalteter Aufbau entsteht, bei dem jede einzelne Batterieeinzelzelle doppelt in die elektrische Schaltung eingebunden ist, sodass auch im Falle einer Beschädigung oder eines Ausfalls einer der Verbindungen, beispielsweise aufgrund einer fehlerhaften Schweißnaht, die volle elektrische Funktionalität gegeben ist.

Dabei sind die Batteriepole unterschiedlicher Polarität auf einer Seite jeder der Batterieeinzelzellen benachbart angeordnet sein. Dies ist der an sich übliche Aufbau, bei welchem beispielsweise an den Batterieeinzelzellen oben links jeweils die Pole der einen Polarität und rechts die Pole der anderen Polarität zu liegen kommen. Je nach gewünschter Verschaltung kann auch durch ein wechselseitiges Verdrehen benachbarter Batterieeinzelzellen dann eine außerordentlich einfache und effiziente Reihenschaltung der Batterieeinzelzellen erreicht werden.

Im erfindungsgemäßen Batteriemodul sind die Batteriepole unterschiedlicher Polarität auf der gegenüberliegenden Seite spiegelverkehrt angeordnet. Durch diesen Aufbau, bei welchem die Batteriepole auf der einen Seite in einer Rechts-Links-Konfiguration und auf der gegenüberliegenden Seite in einer Links-Rechts-Konfiguration angeordnet sind, sorgt dafür, dass die Zellverbinder, mit welchen die Batterieeinzelzellen elektrisch verschaltet werden, innerhalb des Stapels versetzt zueinander angeordnet sind. Sie liegen sich also diagonal gegenüber, sodass eine besonders hohe mechanische Stabilität durch die Zellverbinder erreicht werden kann.

Gemäß einer besonders vorteilhaften Ausgestaltung des erfindungsgemäßen Batteriemoduls kann es nun ferner vorgesehen sein, dass die Zellverbinder eine Dicke von mehr als 0,5 mm aufweisen. Zellverbinder mit einer Dicke von mehr als 0,5 mm sind für den üblichen Aufbau von Batteriemodulen vergleichsweise dick, sorgen damit jedoch für einen geringen Leitungswiderstand einerseits und erlauben eine vergleichsweise hohe mechanische Stabilität des selbsttragenden Zellstapels andererseits. Indem die Dicke der Zellverbinder etwas höher als üblich gewählt wird, lässt sich also die mechanische Stabilität deutlich verbessern. Ein möglicher Gewichtszuwachs durch die höhere Materialstärke sowie den gegebenenfalls auf der gegenüberliegenden Seite zusätzlich notwendigen zweiten Zellverbinder für die gleiche elektrische Verbindung und ein damit verbundener etwas höherer Materialaufwand wird durch den Wegfall von Endplatten und Spannelementen mehr als kompensiert, sodass dennoch eine sehr viel leichtere Batterie als bei den im Stand der Technik beschriebenen Aufbauten entsteht.

Die Zellverbinder können gemäß einer sehr vorteilhaften Weiterbildung aus Aluminium oder einer Aluminiumlegierung oder Kupfer oder einer Kupferlegierung ausgebildet sein. Solche Zellverbinder sind entsprechend leicht und dennoch vergleichsweise stabil. Sie bieten außerdem eine gute elektrische Leitfähigkeit. Sie können dann gemäß einer vorteilhaften Ausgestaltung durch Laserschweißen mit den Batteriepolen verbunden werden. Zum Schweißen können dabei verschiedene Techniken eingesetzt werden, beispielsweise eine sogenannte I-Naht oder auch eine Kehlnaht am Übergang zwischen dem Zellverbinder und dem Batteriepol.

Gemäß einer weiteren sehr günstigen Ausgestaltung des Batteriemoduls ist es dabei vorgesehen, dass die Batterieeinzelzellen innerhalb des Zellstapels in Stapelrichtung beabstandet zueinander angeordnet sind, sodass im Falle eines irreversiblen Zelldickenwachstums der Batterieeinzelzellen, welches mit einer zunehmenden Alterung der Batterieeinzelzellen auftritt, ausreichend Bauraum vorhanden ist, um einen unnötig hohen Druck auf die jeweiligen Batterieeinzelzellen vor dem Erreichen ihres Lebensdauerendes zu vermeiden. Dieser Abstand kann entweder als Hohlraum verbleiben oder mit entsprechenden elastischen Spannmatten oder dergleichen verfüllt werden.

Die erfindungsgemäße Batterie umfasst nun wenigstens ein derartiges Batteriemodul. Sie kann entsprechend einfach und leicht aufgebaut werden, da durch die selbstragenden Stapel der Batterieeinzelzellen innerhalb des Batteriemoduls auf aufwändige Elemente zum Verspannen der Batterieeinzelzellen verzichtet werden kann. Es reicht also vielmehr aus, eines oder mehrere derartige Batteriemodule in einem Gehäuse zu der Batterie zusammenzufassen, in welchem dann auch die notwendige Steuerungselektronik sowie eine Kühlung oder dergleichen angeordnet sein kann.

Eine derartige Batterie eignet sich prinzipiell für verschiedene Anwendungen. Sie kann insbesondere als sogenannte Hochvolt-Batterie ausgebildet sein, also gemäß ECE 100R als Batterie mit einer Gleichspannung von mehr als 60 V. Derartige Batterien werden häufig zur Speicherung von elektrischer Antriebsenergie für zumindest teilweise elektrisch angetriebene Fahrzeuge eingesetzt. Dementsprechend kann auch ein Fahrzeug mit wenigstens einer derartigen Batterie vorgesehen werden, welche zum Speichern von elektrischer Antriebsleistung eingerichtet ist.

Weitere vorteilhafte Ausgestaltungen des Batteriemoduls gemäß der Erfindung ergeben sich auch anhand der Ausführungsbeispiele, welche nachfolgend unter Bezugnahme auf die Figuren näher beschrieben sind.

Dabei zeigen:
- Fig. 1: eine dreidimensionale schematische Ansicht einer Batterieeinzelzelle für ein erfindungsgemäßes Batteriemodul;
- Fig. 2: einen Ausschnitt aus einem erfindungsgemäßen Batteriemodul in einer Explosionsdarstellung;
- Fig. 3: das fertiggestellte Batteriemodul gemäß der Explosionsdarstellung in Fig. 2 in einer ersten Ausführungsform;
- Fig. 4: das fertiggestellte Batteriemodul gemäß der Explosionsdarstellung in Fig. 2 in einer zweiten Ausführungsform;
- Fig. 5: eine alternative Ausgestaltung eines Ausschnitts aus einem Batteriemodul analog zur Darstellung in Fig. 3; und
- Fig. 6: eine Draufsicht auf den Aufbau gemäß Fig. 5.

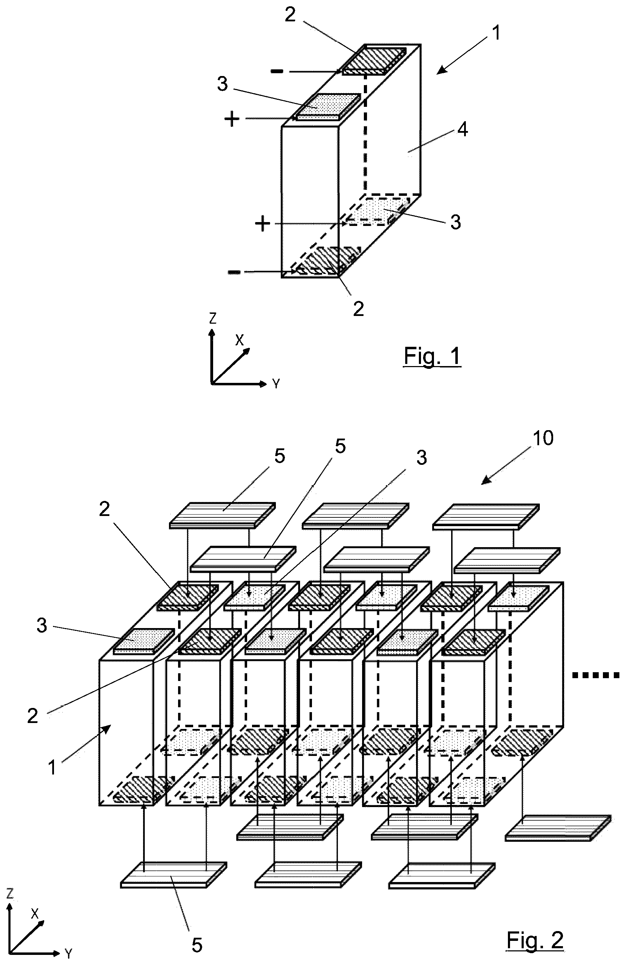

In der Darstellung der Figur 1 ist eine mit 1 bezeichnete prismatische Batterieeinzelzelle zu erkennen, welche beispielsweise mit einer Lithium-lonen-Zellchemie ausgeführt sein soll. Auf dem hier dargestellten Außengehäuse dieser prismatischen Batterieeinzelzelle 1 befinden sich sowohl oben als unten in der Darstellung der Figur 1, also jeweils in der in der Figur 1 eingezeichneten Z-Richtung, zwei Batteriepole unterschiedlicher Polarität. Dabei ist der negative Batteriepol bzw.

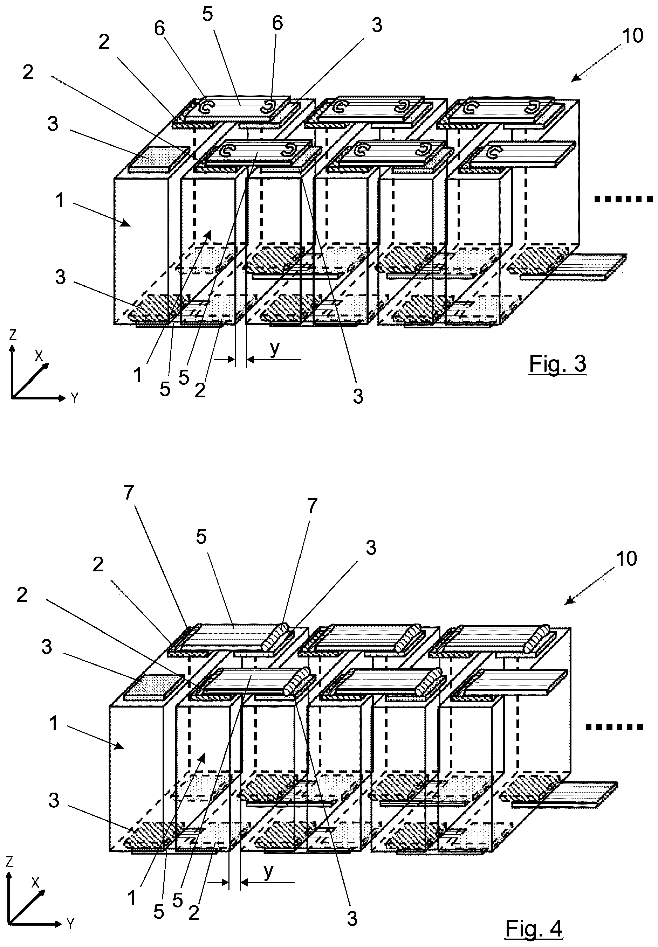

Zellpol mit 2 bezeichnet, der positive Batteriepol mit 3. Auf der gegenüberliegenden Seite des Zellgehäuses 4 befinden sich diese Batteriepole 2, 3 nochmals, jedoch in gespiegelter Ausführungsform, sodass also direkt gegenüber des positiven Batteriepols 3 an der Oberseite des Zellgehäuses 4, an der Unterseite der negative Batteriepol 2 zu liegen kommt, und andersherum. Diese Batterieeinzelzellen 1 werden nun zu einem Batteriemodul 10 zusammengefügt. In der Darstellung der Figur 2 sind mehrere derartige Batterieeinzelzellen 1 nebeneinander zu erkennen. Die jeweils benachbarten Batterieeinzelzellen 1 sind dabei um ihre Hochhachse gedreht, sodass also auf der Oberseite abwechselnd die Pluspole 3 und die Minuspole 2 benachbart zueinander liegen und dementsprechend auf der Unterseite der Zellgehäuse 4 ebenfalls, jedoch spiegelverkehrt zu der Anordnung oben. Über Zellverbinder 5, welche vorzugsweise aus einem Aluminium- oder Kupferwerkstoff bestehen und eine Materialstärke von mehr als 0,5 mm aufweisen, werden nun benachbarte Zellpole 2, 3 benachbarter Batterieeinzelzellen 1 miteinander verbunden. Dies erfolgt hier so, dass die Verbindung zwischen den benachbarten Zellpolen 2, 3 unterschiedlicher Polarität erfolgt, sodass das Batteriemodul 10 also aus in Reihe verschalteten Batterieeinzelzellen 1 besteht. Die Verbindung über die Zellverbinder 5 erfolgt dabei sowohl auf der Oberseite als auch redundant hierzu, jedoch diagonal gegenüberliegend auf der Unterseite. Der fertige Aufbau ist dann in der Darstellung der Figur 3 zu erkennen, wobei hier über mit 6 bezeichnete I-Nähte die Zellverbinder 5 mit den entsprechenden Batteriepolen 2, 3 verschweißt sind. Dieses Verschweißen kann vorzugsweise über Laserschweißen erfolgen. Der Aufbau des Batteriemoduls 10 aus den einzelnen Batterieeinzelzellen 1 ermöglicht dann einen sowohl mechanisch stabilen als auch elektrisch in der gewünschten Art und Weise, hier als Reihenschaltung, verschalteten Aufbau. Durch die Anordnung der Zellverbinder 5 sowohl oben als auch unten ergibt sich einerseits eine Redundanz bei der elektrischen Verschaltung und andererseits wird die mechanische Stabilität des selbstragenden Batteriemoduls 10 durch die jeweils diagonal gegenüberliegende Verwendung der Zellverbinder mechanisch stabilisiert.

In der Darstellung der Figur 4 wird derselbe Aufbau nochmals gezeigt. An die Stelle der in Figur 3 mit 6 bezeichneten I-Naht treten hier nun mit 7 bezeichnete Kehlnähte. Ansonsten ist der Aufbau identisch. In beiden Aufbauten des Batteriemoduls 10 ist dabei zu erkennen, dass zwischen benachbarten Batterieeinzelzellen 1 ein in der Darstellung der Figur 3 und 4 an einer Stelle rein beispielhaft eingezeichneter Abstand y in der Y-Richtung der jeweiligen Darstellung verbleibt. Dieser Abstand, welcher beispielsweise auch mit einer elastischen Spannmatte ausgefüllt werden kann, dient dazu, für ein irreversibles Zelldickenwachstum während der Lebensdauer der Batterieeinzelzellen einen ausreichenden Raum zu bieten, sodass die Zellen dieses Zelldickenwachstum erfahren können, ohne dass der Druck in den Zellen so groß wird, dass es zu sicherheitskritischen Situationen kommt.

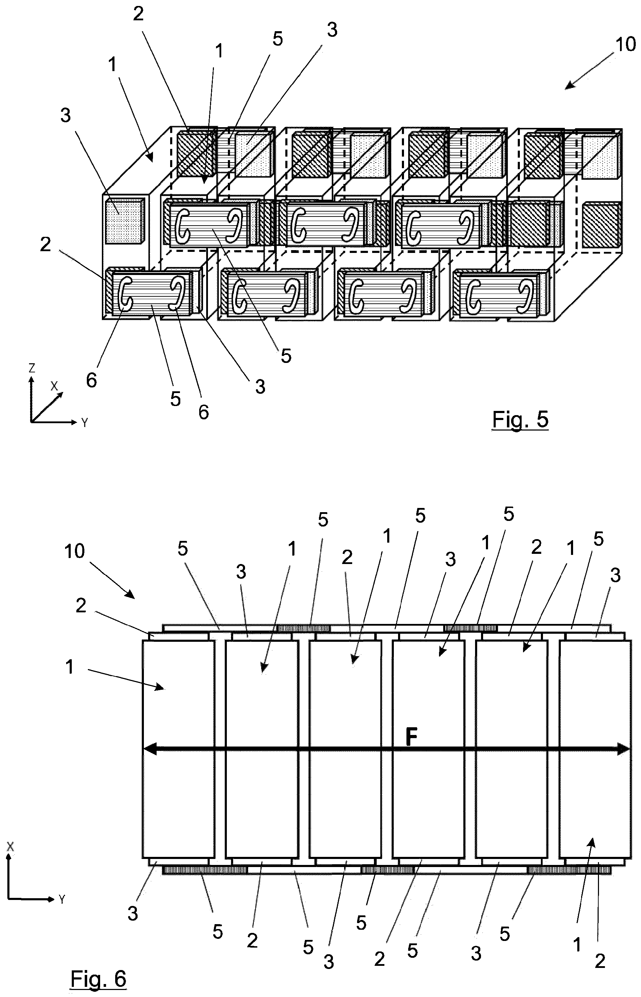

In der Darstellung der Figur 5 ist nun ein alternativer Aufbau gezeigt, bei welchem die einzelnen Batteriepole 2, 3 nicht mehr oben und unten, sondern an der in der Ansicht der Figur 5 vorderen und hinteren Seitenfläche entsprechend angeordnet sind. Auch hier sind die einzelnen Zellverbinder 5 wieder über die I-Naht verschweißt, es wäre genauso gut der Einsatz einer Kehlnaht analog zur Darstellung in Figur 4 oder auch einer beliebigen anderen Art der Verschweißung denkbar.

Abschließend ist in der Darstellung der Figur 6 nochmals eine Draufsicht auf die Darstellung in Figur 5 zu erkennen. Dabei sind die oben liegenden Zellverbinder direkt zu erkennen, die unten liegenden Zellverbinder sind mit einer senkrechten Schraffur versehen, um diese entsprechend ihrer Position zu kennzeichnen. Über den Doppelpfeil mit einem möglichen Kräfteaufkommen F sind dabei die mechanischen Belastungen durch das bereits angesprochene Zelldickenwachstum angedeutet, welchem die Zellverbinder 5 zur Ausbildung des selbstragenden Batteriemoduls 10 entsprechend entgegenwirken müssen.

## Patentansprüche

1. Batteriemodul (10) mit einem Stapel von prismatischen Batterieeinzelzellen (1), deren Batteriepole (2, 3) über aufgeschweißte Zellverbinder (5) elektrisch kontaktiert sind, wobei die Zellverbinder (5) in der Art ausgebildet sind, dass sie die Batterieeinzelzellen (1) zu einem selbsttragenden Stapel verbinden, wobei jede der Batterieeinzelzellen (1) zwei Batteriepole (2, 3) jeder Polarität aufweist, wobei die Batteriepole (2, 3) derselben Polarität an gegenüberliegenden Seiten eines Zellgehäuses (4) der Batterieeinzelzelle (1) ausgebildet sind, wobei bei den im Inneren des Stapels liegenden Batterieeinzelzellen (1) beide Batteriepole (2, 3) der jeweiligen Polarität mittels Zellverbindern (5) mit den entsprechenden Batteriepolen (2, 3) der benachbarten Batterieeinzelzelle (1) verbunden sind, und wobei die Batteriepole (2, 3) unterschiedlicher Polarität auf einer Seite des Zellgehäuses (4) jeder der Batterieeinzelzellen (1) benachbart angeordnet sind,
**dadurch gekennzeichnet, dass**
die Batteriepole (2, 3) unterschiedlicher Polarität auf der gegenüberliegenden Seite des Zellgehäuses (4) spiegelverkehrt angeordnet sind.

2. Batteriemodul (10) nach Anspruch 1,
**dadurch gekennzeichnet, dass**
die Zellverbinder (5) eine Materialdicke von mehr als 0,5 mm aufweisen.

3. Batteriemodul (10) nach Anspruch 1 oder 2,
**dadurch gekennzeichnet, dass**
die Zellverbinder (5) aus Aluminium oder einer Aluminiumlegierung oder Kupfer oder einer Kupferlegierung ausgebildet sind.

4. Batteriemodul (10) nach einem der Ansprüche 1 bis 3,
**dadurch gekennzeichnet, dass**
die Zellverbinder (5) durch Laserschweißen mit den Batteriepolen (2, 3) verbunden sind.

5. Batteriemodul (10) nach einem der Ansprüche 1 bis 4,
**dadurch gekennzeichnet, dass**
benachbarte Batterieeinzelzellen (1) innerhalb des Stapels der Batterieeinzelzellen (1) mit einem Abstand (y) angeordnet sind.

6. Batterie mit wenigstens einem Batteriemodul (10) nach einem der Ansprüche 1 bis 5.

7. Fahrzeug mit wenigstens einer Batterie gemäß Anspruch 6, welche zur Speicherung von elektrischer Antriebsleistung ausgebildet ist.

## Claims

1. Battery module (10) comprising a stack of prismatic individual battery cells (1), the battery terminals (2, 3) of which are electrically contacted via welded on cell connectors (5), wherein the cell connectors (5) are designed such that they connect the individual battery cells (1) to form a self-supporting stack, wherein each of the individual battery cells (1) has two battery terminals (2, 3) of each polarity, wherein the battery terminals (2, 3) of the same polarity are on opposite sides of a cell housing (4) of the individual battery cell (1), wherein, in the case of the individual battery cells (1) located inside the stack, both battery terminals (2, 3) of the relevant polarity are connected to the corresponding battery terminals (2, 3) of the adjacent individual battery cell (1) by means of cell connectors (5), and wherein the battery terminals (2, 3) of different polarity are arranged adjacent to one another on one side of the cell housing (4) of each of the individual battery cells (1),
**characterized in that**
the battery terminals (2, 3) of different polarity are arranged in a mirror-inverted manner on the opposite side of the cell housing (4).

2. Battery module (10) according to claim 1,
**characterized in that**
the cell connectors (5) have a material thickness of more than 0.5 mm.

3. Battery module (10) according to claim 1 or 2,
**characterized in that**
the cell connectors (5) are made of aluminum or an aluminum alloy or copper or a copper alloy.

4. Battery module (10) according to any of claims 1 to 3,
**characterized in that**
the cell connectors (5) are connected to the battery terminals (2, 3) by laser welding.

5. Battery module (10) according to any of claims 1 to 4,
**characterized in that**
adjacent individual battery cells (1) are arranged at a distance (y) within the stack of the individual battery cells (1).

6. Battery comprising at least one battery module (10) according to any of claims 1 to 5.

7. Vehicle comprising at least one battery according to claim 6 which is designed to store electrical drive power.

## Revendications

1. Module de batterie (10) comportant un empilement de cellules de batterie individuelles (1) prismatiques dont les pôles de batterie (2, 3) sont électriquement mis en contact par le biais de connecteurs de cellules (5) soudés, dans lequel les connecteurs de cellules (5) sont conçus de manière à connecter les cellules de batterie individuelles (1) pour former un empilement autoportant, dans lequel chacune des cellules de batterie individuelles (1) présente deux pôles de batterie (2, 3) de chaque polarité, dans lequel les pôles de batterie (2, 3) de même polarité sont conçus sur des côtés opposés d'un boîtier de cellule (4) de la cellule de batterie individuelle (1), dans lequel, pour les cellules de batterie individuelles (1) situées à l'intérieur de l'empilement, les deux pôles de batterie (2, 3) de la polarité respective sont connectés, à l'aide de connecteurs de cellules (5), aux pôles de batterie (2, 3) correspondants de la cellule de batterie individuelle (1) adjacente, et dans lequel les pôles de batterie (2, 3) de polarité différente sont disposés de manière adjacente sur un côté du boîtier de cellule (4) de chacune des cellules de batterie individuelles (1),
**caractérisé en ce que**
les pôles de batterie (2, 3) de polarité différente sont disposés en miroir sur le côté opposé du boîtier de cellule (4).

2. Module de batterie (10) selon la revendication 1,
**caractérisé en ce que**
les connecteurs de cellules (5) présentent une épaisseur de matériau supérieure à 0,5 mm.

3. Module de batterie (10) selon la revendication 1 ou 2,
**caractérisé en ce que**
les connecteurs de cellules (5) sont conçus en aluminium ou en un alliage d'aluminium, ou en cuivre ou en un alliage de cuivre.

4. Module de batterie (10) selon l'une des revendications 1 à 3,
**caractérisé en ce que**
les connecteurs de cellules (5) sont connectés aux pôles de batterie (2, 3) par soudage au laser.

5. Module de batterie (10) selon l'une des revendications 1 à 4,
**caractérisé en ce que**
les cellules de batterie individuelles (1) adjacentes sont disposées à une distance (y) les unes des autres dans l'empilement de cellules de batterie individuelles (1).

6. Batterie comportant au moins un module de batterie (10) selon l'une des revendications 1 à 5.

7. Véhicule comportant au moins une batterie conformément à la revendication 6, conçue pour le stockage de la puissance électrique nécessaire à l'entraînement.
